# NEUE EUROPÄISCHE PATENTSCHRIFT

(11) **EP 0 360 961 B2**
(45) Veröffentlichungstag und Bekanntmachung des Hinweises auf die Entscheidung über den Einspruch: **03.09.1997**
(45) Hinweis auf die Patenterteilung: 19.05.1993
(21) Anmeldenummer: 89106028.7
(22) Anmeldetag: 06.04.1989
(51) Int. Cl.: D01G 15/88, B23D 61/18, B23D 61/12

(54) **Sägezahn-Ganzstahlgarnitur**
All-steel saw tooth card clothing
Garniture de cardage tout-acier en dent de scie

(30) Priorität: 24.08.1988 CH 3140/88
(43) Veröffentlichungstag der Anmeldung: 04.04.1990
(73) Patentinhaber: Graf + Cie AG, CH-8640 Rapperswil (CH)
(72) Erfinder: Graf, Ralph Armin, CH-8807 Freienbach (CH)
(74) Vertreter: Patentanwälte Leinweber & Zimmermann

(56) Entgegenhaltungen:
- AU-A- 286 339
- DE-A- 2 053 973
- DE-A- 2 335 057
- DE-A- 3 600 570
- DE-B- 1 056 030
- DE-C- 651 299
- DE-C- 858 601
- GB-A- 734 129
- US-A- 4 606 095
- PATENT ABSTRACTS OF JAPAN, Band 11, Nr. 262 (C-442)[2709], 26. August 1987, page 42 C 442; & JP-A-62 62 919 (HIROYUKI KANAI) 19-03-1987

## Beschreibung

Die vorliegende Erfindung betrifft eine Sägezahn-Ganzstahlgarnitur für eine Krempelmaschine, welche Garnitur einen Fussabschnitt und daran anschliessenden Blattabschnitt einschliesslich die Zähne aufweist.

In Krempelmaschinen sind solche Garnituren in Form von Sägezahndrähten wendelförmig und eng aneinander anliegend auf dem Tambour gewickelt. Sie arbeiten mit weiteren auf dem Deckel bzw. den Deckeln der Krempelmaschine angeordneten Garnituren derselben oder irgendwelcher anderer bekannten Ausführungen zusammen um die dazwischen eingebrachten Fasern zu kardieren.

Übliche Formen der Sägezahn-Ganzstahlgarnituren sind in der internationalen Norm ISC 5234 angegeben. Bekannte Garnituren, die diese üblichen Formen besitzen, weisen eine totale Höhe von mindestens 2,0 mm auf. Diese totale Höhe setzt sich aus derjenigen des Fussabschnittes und des Blattabschnittes des Sägezahndrahtes zusammen, wobei der Fussabschnitt eine Höhe von 1,0 - 1,6 - 1,8 mm aufweisen kann. Die Fussbreite liegt dabei in einem Bereich von 0,4 bis zum gebräuchlichen maximalen Wert von ca. 2,5 mm. Für das Kardieren mit den herkömmlichen Sägezahn-Ganzstahlgarnituren von Textilfasern aus natürlichen oder synthetischen Polymeren werden üblicherweise Zylindergarnituren mit einer totalen Höhe von 2,0 - 3,2 mm eingesetzt, wobei die entsprechende Fusshöhe 1,2 - 1,4 mm beträgt.

Im Betrieb der Krempelmaschine bei rotierendem Tambour werden bekanntlich nicht alle Fasern durch die Zentrifugalkraft gegen die Hüllfläche des Tambours getrieben. Insbesondere durch ein unregelmässiges Abnehmen vom Tambour auf die Abnehmerwalze entsteht eine gewisse Füllung der Räume zwischen den jeweiligen Blattabschnitten aneinander anliegender Sägezahndrähte durch die Fasern. Durch die fortlaufende Zufuhr weiterer zu kardierender Fasern entsteht nun unterhalb des Kardierbereichs eine Verdichtung zwischen den Spitzen der Ganzstahlgarnituren. Dadurch, dass die Fasern in den nichtkardierenden Bereich der Ganzstahlgarnituren gedrückt werden, entsteht in den genannten toten Räumen eine beträchtliche Faseransammlung. Offensichtlich hängt das Ausmass des Ansammelns unter anderem von der Faserlänge, der Kräuselung, der Oberflächenstruktur der Fasern und der Faserdicke ab. Diese Fasern werden nun von den Zahnspitzen der Deckelbeschläge nicht mehr erfasst, d.h. sie sind mitunter dem Kardierbereich entzogen. Auch wird das Abnehmen der Fasern vom Abnehmer beeinflusst, insbesondere kann eine unterschiedliche Abgabe zwischen dem Tambour und dem Abnehmer entstehen, welches offensichtlich nachteilige Auswirkungen auf das kardierte Erzeugnis bewirkt.

Zur Verminderung der Faseransammlung zwischen den Blattabschnitten benachbarter, aneinander anliegender Sägezahndrahtabschnitte einer Ganzstahlgarnitur wurde vorgeschlagen, die Zahneinschnittiefe der Garnitur zu verringern, um dadurch dem Entziehen der vor der Garnitur im Bereich ihrer Zahnfüsse mitgeführten Fasern aus dem Kardierbereich entgegenzuwirken (vgl.: "The Design and Maintainance of Card Clothing for the Modern Cotton Card", K. Grimshaw et al., überarbeitete Fassung vom 1977 herausgegeben von "The English Card Clothing, Co. Ltd.", Huddersfield, England; GB-A-734 129).

Ferner ist versucht worden, diesem Nachteil entgegenzuwirken, indem das zwischen den jeweiligen Blattabschnitten vorhandene Volumen verringert wurde, indem die Fussbreite verringert wurde. Damit entstand aber die Neigung zum seitlichen Kippen der Sägezahndrähte. Diese müssen bei der Montage mit dem Mantel des Tambours einen Winkel von 90° einschliessen. Damit ist der Verringerung der Fussbreite zumindest aus Montagegründen eine Grenze gesetzt.

Ein weiterer Nachteil der bekannten Kardiergarnitur besteht darin, dass zwischen und mit den Garnituren relativ grosse Luftmassen bewegt werden, die zufolge der hohen Umdrehungsgeschwindigkeit (z.B. 300-600 U/min.) des Tambours erzeugen können, welche das Kardierergebnis negativ beeinflussen. Bisher wurde versucht, mittels Schlitzrosten und Leitblechen ausserhalb der eigentlichen Kardierzonen die Luftmassen von der Garnituroberfläche abzuführen. Diese Massnahme ist für die Kardierzonen selbst nur sehr bedingt wirksam.

Hier will die Erfindung Abhilfe schaffen. Die Erfindung, wie sie in den Ansprüchen gekennzeichnet ist, löst die Aufgabe, eine Sägezahn-Ganzstahlgarnitur für eine Krempelmaschine zu schaffen, bei welcher sichergestellt ist, dass sich die Fasern ständig im Kardierbereich der Zahnspitzen befinden.

Die durch die Erfindung erreichbaren Vorteile sind im wesentlichen darin zu sehen, dass keine Toträume in der Garnitur vorhanden sind, in welchen sich Fasern ansammeln können, womit eine effizientere Auflösung der Faserflocken in Verbindung mit einer intensiveren Reinigung von Baumwollfasern bewirkt werden kann. Auch entfällt das Nachschleifen der Zahnspitzen, weil stumpf gewordene Garnituren lediglich ausgewechselt werden müssen.

Nachfolgend wird der Erfindungsgegenstand anhand der Zeichnungen beispielsweise näher erläutert.

Es zeigen:
Figur 1 einen Schnitt durch eine bekannte Sägezahn-Ganzstahlgarnitur,
Figur 2 eine Seitenansicht einer Ausführung der erfindungsgemässen Sägezahn-Ganzstahlgarnitur,
Figur 3 einen Schnitt entlang der Linie III-III der Figur 2, und
Figur 4 eine Darstellung nach der DIN Norm ISO 5234 zur Veranschaulichung der Winkelbezeichnungen.

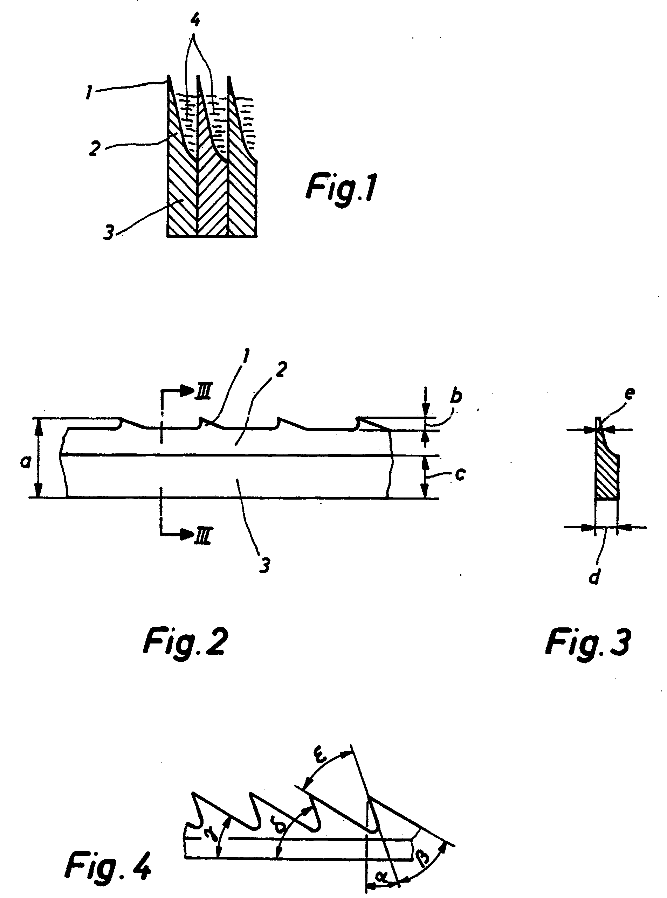

Die Figur 1 zeigt einen Schnitt durch eine herkömmliche Sägezahn-Ganzstahlgarnitur, wobei bei den hier gezeigten drei aneinander anliegenden Sägezahndrähte die jeweiligen Zähne mit der Bezugsziffer 1, die Blattabschnitte mit 2 und Fussabschnitte mit 3 bezeichnet sind. Es ist ersichtlich, dass zwischen zwei jeweiligen Blattabschnitten 2 ein Leerraum vorhanden ist, in welchem sich, wie eingangs erklärt, die Fasern ansammeln, so dass sie von den Zahnspitzen der Deckelbeschläge nicht mehr erfasst werden können, und der Bereich dieser Faseransammlung ist mit der Bezugsziffer 4 angedeutet.

Die Figur 2 zeigt eine Seitenansicht und die Figur 3 eine Schnittansicht eines erfindungsgemässen Sägezahndrahtes. Die Gesamthöhe a von Blattabschnitt 8 und Fussabschnitt 3 beträgt weniger als 2,0 mm. Dabei ist das Verhältnis der genannten Gesamthöhe a zur Fusshöhe c des Fussabschnittes 3 weniger als 1,8. Dabei beträgt die Fusshöhe weniger als 1,2 mm, jedoch mehr als 0,1 mm. Die Fussbreite d beträgt weniger als 0,5 mm, jedoch mehr als 0,1 mm. Die Zahneinschnittiefe b beträgt 0,05 mm bis 0,7 mm.

Der Brustwinkel a beträgt ≥ 15° um eine positive Faserführung und Faserhaftung zu gewährleisten, welches für die Kardierung von höchster Notwendigkeit ist. Figur 4 nach DIN ISO 5234 veranschaulicht die genormten Winkelbezeichnungen. Dabei gilt:

| Symbol | Benennung | Definition |
|---|---|---|
| α | = Brustwinkel | Winkel zwischen Brustfläche und Vertikalachse zur Drahtbasis |
| | | |
| β | = Keilwinkel | Winkel zwischen Brustwinkel und Rückenwinkel des Zahnes |
| | | |
| γ | = Rückenwinkel | Winkel zwischen Rückenfläche und der Drahtbasis |
| | | |
| δ | = Brustwinkel | Winkel zwischen Brustfläche und der Drahtbasis |
| | | |
| ε | = Öffnungswinkel | Entspricht dem Keilwinkel (ε = β) |

Die Garnitur ist vorteilhaft aus härtbarem Stahl hergestellt. Dabei ist es besonders vorteilhaft legierte Stähle, insbesondere hochlegierten härtbaren oder nicht-härtbaren Kohlenstoffstahl einzusetzen.

Diese Sägezahn-Ganzstahlgarnitur weist praktisch keine toten Volumen ausserhalb des Kardierbereichs auf, in denen eine Faseransammlung 4 (siehe Figur 1) entstehen könnte. Damit erfolgt eine optimale Kardierung an der Tambouroberfläche sowie eine vollständige Übergabe von Tambour auf den Abnehmer. Folglich sind die nachfolgenden Garnwerte höher als bisher. Weil nun die Spitzen wie angegeben sehr fein sind, ergibt sich der Vorteil, daß die Spitzen nicht mehr nachgeschärft werden müssen, wie dies bis dahin üblich war. Wenn die Spitzen abgeschliffen bzw. stumpf geworden sind, wird die gesamte Garnitur einfach ausgewechselt. Folglich wird der Wirkungsgrad einer derart ausgerüsteten Krempelmaschine wesentlich erhöht, weil das Zwischen- oder Nachschleifen der Ganzstahlgarnituren entfällt, bis der Ersatz der gesamten Garnitur notwendig wird. Weiter ist aus den angegebenen Werten ersichtlich, daß nun viel kleinere Luftmassen durch das Rotieren des Tambours mitbewegt werden, entsprechend eine kleinere Turbulenz entsteht und folglich eine bessere Parallellage der Fasern erzielt werden kann.

Es ist noch zu bemerken, daß die Deckelbeschläge, wie bisher bekannt, beibehalten werden können und unabhängig von der jeweiligen erfindungsgemäss ausgebildeten Tambourgarnitur eingesetzt werden können.

## Patentansprüche

1. Sägezahn-Ganzstahlgarnitur für eine Krempelmaschine, welche Garnitur einen Fußabschnitt (3) und daran anschliessenden Blattabschnitt (2) einschließlich die Zähne (1) aufweist, bei der die Gesamthöhe (a) von Fuss (3) - und Blattabschnitt (2) weniger als 2,0 mm und mehr als 0,5 mm, das Verhältnis Gesamthöhe (a) zu Fusshöhe (c) weniger als 1,8 und die Fussbreite (d) weniger als 0,5 mm und mehr als 0,1 mm betragen.

2. Sägezahn-Ganzstahlgarnitur nach Anspruch 1, dadurch gekennzeichnet, dass die Fusshöhe (c) weniger als 1,2 mm beträgt.

3. Sägezahn-Ganzstahlgarnitur nach einem der vorangehenden Ansprüche, dadurch gekennzeichnet, dass die Zahneinschnittiefe (b) 0,05 mm bis 0,7 mm beträgt.

4. Sägezahn-Ganzstahlgarnitur nach einem der vorangehenden Ansprüche, dadurch gekennzeichnet, dass die Garnitur aus hochlegiertem Kohlenstoffstahl besteht.

5. Sägezahn-Ganzstahlgarnitur nach einem der vorangehenden Ansprüche, dadurch gekennzeichnet, daß der Brustwinkel α, zur Vertikalen gemessen ≥ 15° beträgt.

## Claims

1. An all-stell sawtooth card clothing for a carding machine, which clothing has a foot section (3) followed by web section (2) including the teeth (1), in which the total height (a) of the foot (3) and the web section (2) amounts to less than 2.0 mm and more than 0.5 mm, the ratio of total height (a) to foot height (c) amounts to less than 1.8 and the foot width (d) amounts to less than 0.5 mm and more than 0.1 mm.

2. An all-steel sawtooth card clothing according to Claim 1, characterized in that the foot height (c) amounts to less than 1.2 mm.

3. An all-steel sawtooth card clothing according to any one of the preceding Claims, characterized in that the depth (b) of the teeth amounts to 0.05 mm to 0.7 mm.

4. An all-steel sawtooth card clothing according to any one of the preceding Claims, characterized in that the clothing consists of highly alloyed carbon steel.

5. An all-steel sawtooth card clothing according to any one of the preceding Claims, characterized in that the breast angle a measured against the vertical amounts to ≥ 15°.

## Revendications

1. Garniture en dents de scie tout-acier pour cardeuse, laquelle garniture présente une partie base (3) et, reliée à celle-ci, une partie feuille (2) comportant les dents (1), dans laquelle la hauteur totale (a) de la partie base (3) et de la partie feuille (2) est inférieure à 2,0 mm et supérieure à 0,5 mm, le rapport entre la hauteur totale (a) et la hauteur (c) est inférieur à 1,8 et la largeur (d) de la base est inférieure à 0,5 mm et supérieure à 0,1 mm.

2. Garniture de dents de scie tout-acier selon la revendication 1, caractérisée en ce que la hauteur (c) de la base est inférieure à 1,2 mm.

3. Garniture de dents de scie selon l'une des revendications précédentes, caractérisée en ce que la profondeur (b) des creux des dents va de 0,05 à 0,7 mm.

4. Garniture de dents de scie tout-acier selon l'une des revendications précédentes, caractérisée en ce que la garniture est réalisée en acier au carbone à forte teneur en éléments d'alliage.

5. Garniture de dents de scie tout-acier selon l'une des revendications précédentes, caractérisée en ce que l'angle d'attaque des dents par rapport à la verticale est supérieur ou égal à 15°.
